(19) Europäisches Patentamt
European Patent Office
Office européen des brevets

(11) **EP 2 096 652 B1**

(12) **EUROPEAN PATENT SPECIFICATION**

(45) Date of publication and mention
of the grant of the patent:
**24.08.2011 Bulletin 2011/34**

(51) Int Cl.:
**H01H 1/00** *(2006.01)*      **H01H 13/00** *(2006.01)*
**G01H 13/00** *(2006.01)*      **G01H 1/00** *(2006.01)*

(21) Application number: **08425119.8**

(22) Date of filing: **27.02.2008**

(54) **Method and device for detecting the natural frequencies of vibration of a turbine blade**

Verfahren und Vorrichtung zur Detektion der natürlichen Frequenzen der Schwingung eines Turbinenblatts

Procédé et dispositif pour détecter les fréquences naturelles de vibration d'une pale de turbine

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**02.09.2009 Bulletin 2009/36**

(73) Proprietor: **ANSALDO ENERGIA S.P.A.**
**16152 Genova (IT)**

(72) Inventor: **Bruzzone, Pietro**
**16155 Genova (IT)**

(74) Representative: **Bergadano, Mirko et al**
**Studio Torta S.r.l.**
**Via Viotti, 9**
**10121 Torino (IT)**

(56) References cited:
**EP-A- 0 042 780      FR-A- 1 144 882**
**GB-A- 762 955      US-A- 3 600 934**
**US-A- 5 015 949**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a method and a device for detecting the natural frequencies of vibration of a turbine blade. In particular, the present invention relates to a method and to a device for detecting the natural frequencies of vibration of the blades of the last two stages of a steam turbine.

Proper and efficient detection of the natural frequencies of vibration of the blades of a turbine is of fundamental importance in the design of the turbine.

When turbine blades are in fact set in rotation, they undergo static and dynamic stresses, caused above all by inertial, centrifugal, and aerodynamic forces, deriving from the motion of rotation and from the interactions between the fluid and the blades. These stresses basically cause a vibration of the blades at a given frequency, referred to as excitation frequency".

In the case where said excitation frequency coincides with one of the natural frequencies of vibration of the blade, the blade starts to vibrate considerably. This sometimes causes onset of damage to the structure of the blade and, consequently, a decrease in the efficiency of the turbine.

For these reasons, in the design step it is customary to carry out vibrational tests aimed at identifying the natural frequencies of vibration of the blades of the turbine so as to prevent to design turbines in which the excitation frequencies coincide with the natural frequencies of the blades. Said tests are conducted by setting the blades of the turbine in a so-called transonic tunnel, which is nothing but a closed chamber in which vacuum is produced, and detecting the natural frequencies of vibration of the blades.

DEVICES FOR DETECTING THE NATURAL FREQUENCIES FOR VIBRATION OF A TURBINE BLADE ARE ALSO KNOWN FROM GB 762955 AND EP 0042780. An aim of the present invention is to provide a method and a device for detecting the natural frequencies of vibration of a turbine blade that is efficient and improved as compared to known methods and devices.

In accordance with said aim, the present invention relates to a method for detecting at least one natural frequency of vibration of a turbine blade according to claim 1.

The invention moreover relates to a device for detecting at least one natural frequency of vibration of a turbine blade according to claim 9.

Further characteristics and advantages of the present invention will emerge clearly from the ensuing description of a non-limiting example of embodiment thereof, with reference to the figures of the annexed drawings, wherein:

- Figure 1 is a block diagram of the detection device according to the present invention; and
- Figure 2 is a schematic representation of a detail of the detection device according to the present invention.

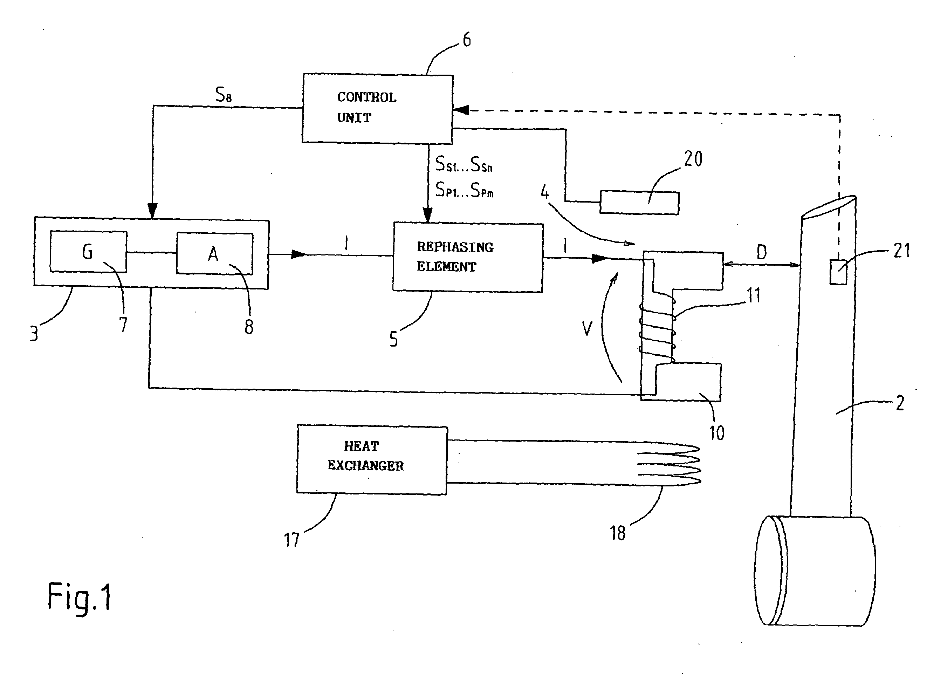

In Figure 1, designated by the reference number 1 is a device for detecting at least one natural frequency of vibration $f_v$ of a blade 2 of a turbine (not illustrated for reasons of simplicity).

In Figure 1, just one blade 2 is illustrated for reasons of simplicity. In practice, the device 1 is used for detecting the natural frequencies $f_v$ of the blades 2 of an entire turbine stage set in motion at different speeds of rotation, comprised between 1000 and 3000 r.p.m., so as to simulate the conditions of normal operation of the turbine stage.

Both the blades 2 and the device 1 are set inside a tunnel (not illustrated for reasons of simplicity), in which vacuum is produced in order to prevent any possible disturbance due to the friction caused by the air on the blades 2.

The device 1 comprises current-generating means 3, an electromagnet 4, a rephasing element 5, a control unit 6, means for cooling the electromagnet 4, distance-detecting means, and frequency-detecting means.

The current-generating means 3 supply a sinusoidal current I of constant intensity and selectively variable frequency $f_0$ for supplying the electromagnet 4.

Hereinafter by "intensity of a sinusoidal quantity" is meant the peak-to-peak amplitude of the sinusoidal quantity; in particular by "constant intensity of a sinusoidal quantity" is meant a constant peak-to-peak amplitude.

The current-generating means 3 comprise a generator 7 and an amplifier 8. The amplifier 8 is of the constant-current type and is set in series between the generator 7 and the electromagnet 4 for amplifying the current generated by the generator 7.

The electromagnet 4 comprises a U-shaped ferromagnetic core 10 and a winding 11 set substantially around the core 10 and supplied by the current I. The electromagnet 4 is set in the proximity of the blade 2; in particular, the electromagnet 4 is set in a way such that the two branches of the core 10 are substantially orthogonal to the blade 2 and set at a distance D from the blade 2 comprised between approximately 6 mm and approximately 15 mm, in particular approximately 10 mm.

The electromagnet 4 generates a magnetic field, which induces vibrations in the blade 2. The intensity of the magnetic field is proportional to the current I that circulates in the winding 11. The fact that the current I has constant intensity guarantees a magnetic field of constant intensity. This makes it possible to highlight the effects due to the variation of the frequency $f_0$ of the current I on the induced vibrations of the blade 2, preventing any disturbance linked to forces of attraction determined by a magnetic field of non-constant intensity.

The rephasing element 5 is set in series between the current-generating means 3 and the electromagnet 4, in particular between the amplifier 8 and the electromagnet 4. The rephasing element 5 eliminates the phase shifts φ between the current I and the voltage V across the electromagnet 4, which is principally due to the presence of the inductive load of the electromagnet 4.

The elimination of the phase shift φ has as main purpose that of increasing the power factor, also known as cosφ, of the inductive load of the electromagnet 4 in order to increase the efficiency of the device 1.

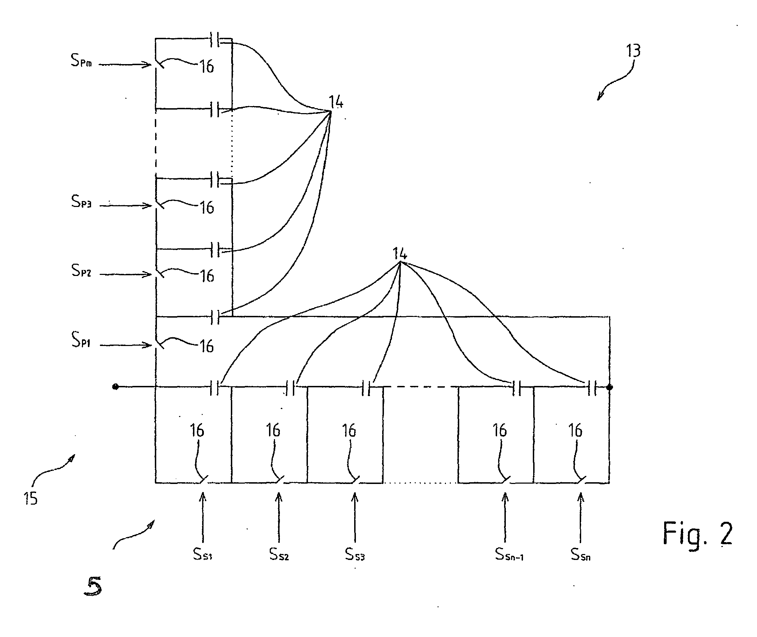

The rephasing element 5 is an element with selectively variable capacitance $C_0$. In particular, as illustrated in Figure 2, the rephasing element 5 comprises a battery 13 of capacitors 14 set in series and/or in parallel, and a selector assembly 15. The selector assembly 15 comprises a plurality of switches 16 controlled for activating one or more capacitors 14 so as to obtain a desired value of capacitance $C_D$ capable of eliminating the phase shift φ between the voltage V and the current I. In particular, the desired value of capacitance $C_D$ is such as to enable reaching of a condition of resonance of the circuit comprising the electromagnet 4, and, consequently, the desired value of capacitance $C_D$ assumes a value equal to

$$C_D = \frac{1}{4\pi^2 f_0^2 L}$$

which depends upon the value of the frequency $f_0$ of the current I generated by the current-generating means 3.

The selector assembly 15 can be controlled manually by an operator, or else automatically by means of the control unit 6, which, on the basis of the value of frequency $f_0$ of the current I, controls the switches 16 through the control signals $S_{S1}...S_{Sn}$ $S_{P1}...S_{Pm}$ for selecting the capacitor 14 or set of capacitors 14, the capacitance $C_0$ of which is equal to the desired value of capacitance $C_D$.

With reference to Figure 1, the means for cooling the electromagnet 4 comprise a heat exchanger 17 connected to a coil 18 made of a non-magnetic material within which a cooling fluid flows. The coil 18 is substantially set in contact with the winding 11 and cools the winding 11. Figure 1 is a schematic representation of a coil 18 not set in contact with the winding 11 for reasons of clarity.

The distance-detecting means comprise a laser sensor 20, which detects the distance D between the electromagnet 4 and the blade 2 whilst the current I is supplied to the electromagnet 4 and sends said distance to the control unit 6. The control unit 6 compares the detected distance D with a safety value, preferably of approximately 5 mm; if the measurement detected is less than the safety value, the control unit sends a signal $S_B$ for blocking supply of the electromagnet 4 so as to cancel the force of attraction of the magnetic field acting on the blade 2. In the non-limiting example illustrated in the attached figures, the block signal $S_B$ sends the current at input to the amplifier 8 to zero.

In this way, it is possible to prevent any accidental impact of the blade 2 with the electromagnet 4, which is due to the vibrations induced and frequently causes damage to the device 1 or to the blade 2 itself. The rotary movement of the blade 2 and the vibrations of the blade 2 can, in fact, bring about a dangerous approach of the blade 2 to the electromagnet 4.

The frequency-detecting means are configured for determining at least one natural frequency of vibration $f_v$ of the blade 2 on the basis of the movement of the blade 2. In particular, the frequency-detecting means comprise means for detecting the movement of the blade 2 so as to detect a signal correlated to the movement of the blade 2. In the non-limiting example described and illustrated herein, the means for detecting the movement of the blade 2 comprise an accelerometer 21, which is set on the blade 2 and transfers the measurements detected to a remote telemetering station. In particular, the measurements of the signal correlated to the movement of the blade 2 detected by the accelerometer 21 are sent to the control unit 6, which, on the basis of the signal correlated to the movement of the blade 2 determines the natural frequency of vibration $f_v$ of the blade 2. In detail, the control unit 6 decides that the frequency $f_0$ of the current I is a natural frequency of vibration $f_v$ of the blade 2 when the signal correlated to the movement of the blade 2 has a value higher than a given threshold.

To carry out the test, the blade 2 is set in motion at a given speed, ranging between 1000 and 3000 r.p.m. (referred to as nominal speed). In particular, the blade 2 is set in motion at the following increasing speeds: 1000, 1500, 2000, 2500 and 3000 r.p.m.

For each speed of the blade 2, in order to identify the natural frequencies of vibration $f_v$ of the blade 2, the current-generating means 3 generate a current I of constant intensity at different frequencies $f_0$ In particular, the frequencies $f_0$ used are approximately between 50 and 500 Hz.

For each frequency $f_0$ of the current I, frequency-detecting means detect a signal correlated to the movement of the blade 2. When the signal correlated to the movement of the blade 2 has a value higher than a given threshold, the frequency $f_0$ of the current I generated is considered as natural frequency of vibration $f_v$ of the blade 2.

For each frequency $f_0$ of the current I generated the value of the capacitance $C_0$ of the rephasing element 5 is moreover updated. As already described, the value of the capacitance $C_0$ of the rephasing element 5 must guarantee a condition of resonance of the circuit.

Finally, it is evident that modifications and variations may be made to the device and to the method described herein, without thereby departing from the scope of the annexed claims.

## Claims

1. A method for detecting at least one natural frequency of vibration ($f_v$) of a turbine blade (2), comprising the steps of:

   - supplying a current (I) of constant intensity and selectively variable frequency ($f_0$) to an electromagnet (4) set in the proximity of the blade (2) for generating a magnetic field adapted to cause a vibration of the blade (2);
   - detecting the vibration of the blade (2); and
   - determining at least one natural frequency of vibration (fV) of the blade (2) on the basis of the vibration of the blade (2);

   the method being **characterized in that** it comprises the steps of:

   - detecting a distance (D) between the electromagnet (4) and the blade (2) of the turbine during the step of supply;
   - blocking supply of the electromagnet (4) if said distance (D) is less than a given safety value to prevent accidental impact of the blade (2) with the electromagnet (4);
   - setting the blade (2) in rotation at a given speed before supplying the electromagnet (4).

2. The method according to Claim 1, wherein the step of blooking supply of the electromagnet (4) comprises the step of cancelling the current (I) before supplying the electromagnet (4).

3. The method according to Claim 1 or 2, comprising the step of cooling the electromagnet (4).

4. The method according to any one of the preceding claims, comprising the step of eliminating the phase shift($\varphi$) between the current (I) and the voltage (V) across the electromagnet (4).

5. The method according to Claim 4, wherein step of eliminating the phase shift ($\varphi$) comprises the step of setting the circuit comprising the electromagnet (4) in conditions of resonance by means of a rephasing element (7) having a selectively variable capacitance ($C_0$).

6. The method according to Claim 5, wherein the step of setting the circuit in resonance conditions comprises the step of selecting a value of capacitance ($C_0$) of the rephasing element (7) on the basis of the value of frequency ($f_0$) of the current (I).

7. The method according to any one of the preceding claims, wherein the step of detecting the vibration of the blade (2) comprises the step of detecting a signal correlated to the vibration of the blade (2) and deciding that the frequency ($f_0$) of the current (I) is a natural frequency of vibration ($f_v$) of the blade (2) when the signal correlated to the vibration of the blade (2) has a value higher than a given threshold.

8. A device for detecting at least one natural frequency of vibration ($f_v$) of a turbine blade (2) of an entire turbine stage set in rotation at different speeds of rotation, comprising:

   - an electromagnet (4), adapted to be set in the proximity of the blade (2);
   - current-generating means (3) for supplying a current (I) of constant intensity and selectively variable frequency ($f_0$) to the electromagnet (4), so as to generate a magnetic field adapted to cause a vibration of the blade (2); and
   - frequency-detecting means, configured for determining at 15:53:06-18.01.2011 15:54:03 least one natural frequency of vibration (fV) of the blade (2) on the basis of the vibration of the blade (2);

   the device being **characterized in that** it comprises:

   - distance-detecting means, for detecting a distance (D) between the electromagnet (4) and the blade (2) of the turbine whilst the current (I) is supplied to the electromagnet (4);
   - a control unit (6) connected to the distance-detecting means for blocking supply of the electromagnet (4) when the distance (D) between the electromagnet (4) and the blade (2) is less than a safety value to prevent accidental impact of the blade (2) with the electromagnet (4).

9. The device according to Claim 8, wherein the distance-detecting means comprise a laser sensor (20).

10. The device according to Claim 8 or 9, wherein the control unit (6) is configured for generating a block signal ($S_B$), adapted to cancel the current (I) before the current (I) is supplied to the electromagnet (4).

11. The device according to any one of Claims 8 to 10, wherein the electromagnet (4) comprises a U-shaped core (10) and a winding (11), arranged substantially around the core (10) and along which the current (I) circulates.

12. The device according to any one of Claims 8 to 11, comprising cooling means (17, 18) for cooling the electromagnet (4).

13. The device according to Claim 12, wherein the cooling means (17, 18) comprise a heat exchanger (17) and a coil (18) made of non-magnetic tubing, within which a cooling fluid flows; the coil (18) being connected to the heat exchanger (17) and being set substantially in contact with the winding (11) of the electromagnet (4).

14. The device according to any one of Claims 8 to 13, comprising a rephasing element (7), configured for eliminating the phase shift ($\varphi$) between the current (I) and the voltage (V) across the electromagnet (4).

15. The device according to Claim 14, wherein the rephasing element (7) is set in series between the current-generating means (3) and the electromagnet (4).

16. The device according to Claim 14 or Claim 15, wherein the rephasing element (7) has a selectively variable capacitance ($C_0$).

17. The device according to Claim 16, wherein the rephasing element (7) comprises a battery of capacitors (14) set in series and/or in parallel; the capacitors (14) being selectively activatable individually or in groups by means of a selector assembly (15).

18. The device according to Claim 17, wherein the selector assembly (15) is controlled on the basis of the value of frequency ($f_0$) of the current (I).

**Patentansprüche**

1. Verfahren zum Detektieren von zumindest einer natürlichen Frequenz der Schwingung ($f_V$) eines Turbinenblattes (2), mit den Schritten:

   - Versorgen eines Elektromagnets (4), der sich in der Nähe des Blattes (2) befindet, mit einem Strom (I) konstanter Intensität und wahlweise variabler Frequenz ($f_0$) zum Erzeugen eines magnetischen Feldes, das angepasst ist, eine Schwingung des Blattes (2) zu bewirken;
   - Detektieren der Schwingung des Blattes (2); und
   - Bestimmen von zumindest einer natürlichen Frequenz der Schwingung ($f_V$) des Blattes (2) anhand der Schwingung des Blattes (2);

   wobei das Verfahren **dadurch gekennzeichnet ist, dass** es die Schritte aufweist:

   - Detektieren eines Abstandes (D) zwischen dem Elektromagnet (4) und dem Blatt (2) der Turbine während des Versorgungsschrittes;
   - Unterbrechen der Versorgung des Elektromagnets (4), falls der Abstand (D) geringer als ein vorgegebener Sicherheitswert ist, um einen zufälligen Zusammenstoß des Blattes (2) mit dem Elektromagnet (4) zu verhindern;
   - Versetzen des Blattes (2) in eine Drehbewegung mit einer vorgegebenen Geschwindigkeit, bevor der Elektromagnet (4) versorgt wird.

2. Verfahren nach Anspruch 1, bei dem der Schritt des Unterbrechens der Versorgung des Elektromagneten (4) den Schritt des Beendens des Stromes (I), bevor der Elektromagnet (4) versorgt wird, aufweist.

3. Verfahren nach Anspruch 1 oder 2, mit dem Schritt des Kühlens des Elektromagneten (4).

4. Verfahren nach einem der vorhergehenden Ansprüche, mit dem Schritt des Beseitigens der Phasenverschiebung ($\varphi$) zwischen dem Strom (I) und der Spannung (V) über dem Elektromagneten (4).

5. Verfahren nach Anspruch 4, bei dem der Schritt des Beseitigens der Phasenverschiebung ($\varphi$) den Schritt des Versetzens des den Elektromagneten (4) aufweisenden Kreises in Resonanz mit Hilfe eines Phasenelements (7), das eine wahlweise variable Kapazität ($C_0$) besitzt.

6. Verfahren nach Anspruch 5, bei dem der Schritt des Versetzens des Kreises in Resonanz den Schritt des Auswählens eines Werts der Kapazität ($C_0$) des Phasenelements (7) auf der Grundlage des Werts der Frequenz ($f_0$) des Stromes (I) aufweist.

7. Verfahren nach einem der vorhergehenden Ansprüche, bei dem der Schritt des Detektierens der Schwingung des Blattes (2) den Schritt des Detektierens eines Signals, das in Korrelation zu der Schwingung des Blattes (2) steht, und den Schritt des Entscheidens, dass die Frequenz ($f_0$) des Stroms (I) eine natürliche Frequenz der Schwingung ($f_V$) des Blattes (2) ist, wenn das Signal, das in Korrelation zu der Schwingung des Blattes (2) steht, einen Wert besitzt, der höher als ein vorgegebener Schwellenwert ist, aufweist.

8. Vorrichtung zum Detektieren von zumindest einer natürlichen Frequenz der Schwingung ($f_V$) eines Turbinenblattes (2) einer gesamten Turbinenanlage, das in Drehung versetzt wird mit unterschiedlichen Drehgeschwindigkeiten, umfassend:

   - einen Elektromagneten (4), der zur Anordnung in der Nähe des Blattes (2) angepasst ist;
   - Stromerzeugungsmittel (3) zum Versorgen des Elektromagneten (4) mit einem Strom (I) konstanter Intensität und wahlweise variabler Frequenz ($f_0$), um so ein magnetisches Feld zu erzeugen, das angepasst ist, eine Schwingung des Blattes (2) zu bewirken; und
   - Frequenzdetektionsmittel, das zur Bestimmung von zumindest einer natürlichen Frequenz der Schwingung ($f_V$) des Blattes (2) anhand der Schwingung des Blattes (2) ausgebildet ist;

wobei die Vorrichtung **dadurch gekennzeichnet ist, dass** sie umfasst:

- Abstandsdetektionsmittel zum Detektieren eines Abstandes (D) zwischen dem Elektromagneten (4) und dem Blatt (2) der Turbine, während der Elektromagnet (4) mit dem Strom (I) versorgt wird;
- eine Steuereinheit (6), die mit dem Abstandsdetektionsmittel verbunden ist zum Unterbrechen der Versorgung des Elektromagneten (4), wenn der Abstand (D) zwischen dem Elektromagneten (4) und dem Blatt (2) geringer als ein Sicherheitswert ist, um einen zufälligen Zusammenstoß des Blattes (2) mit dem Elektromagnet (4) zu verhindern.

9. Vorrichtung nach Anspruch 8, bei der das Abstandsdetektionsmittel einen Lasersensor (20) aufweist.

10. Vorrichtung nach Anspruch 8 oder 9, bei der die Steuereinheit (6) zum Erzeugen eines Blocksignals ($S_B$) ausgebildet ist, das zum Beenden des Stromes (I) angepasst ist, bevor der Elektromagnet (4) mit dem Strom (I) versorgt wird.

11. Vorrichtung nach einem der Ansprüche 8 bis 10, bei der der Elektromagnet (4) einen U-förmigen Kern (10) und eine Windung (11) aufweist, die im Wesentlichen um den Kern (10) angeordnet ist und entlang derer der Strom (I) zirkuliert.

12. Vorrichtung nach einem der Ansprüche 8 bis 11, umfassend Kühlmittel (17, 18) zum Kühlen des Elektromagneten (4).

13. Vorrichtung nach Anspruch 12, bei der das Kühlmittel (17, 18) einen Wärmetauscher (17) und eine Spule (18) aufweist, die aus nicht-magnetischen Röhren gebildet ist, innerhalb derer ein Kühlfluid fließt; wobei die Spule (18) mit dem Wärmetauscher (17) verbunden und so angeordnet ist, dass sie im Wesentlichen in Kontakt mit der Windung (11) des Elektromagneten (4) steht.

14. Vorrichtung nach einem der Ansprüche 8 bis 13, umfassend ein Phasenelement (7), das zum Beseitigen der Phasenverschiebung ($\varphi$) zwischen dem Strom (I) und der Spannung (V) über dem Elektromagnet (4) ausgebildet ist.

15. Vorrichtung nach Anspruch 14, bei der das Phasenelement (7) seriell zwischen dem Stromerzeugungsmittel (3) und dem Elektromagnet (4) angeordnet ist.

16. Vorrichtung nach Anspruch 14 oder 15, bei der das Phasenelement (7) eine wahlweise variable Kapazität ($C_0$) besitzt.

17. Vorrichtung nach Anspruch 16, bei der das Phasenelement (7) eine Batterie aus Kondensatoren (14) aufweist, die seriell und/oder parallel angeordnet sind, wobei die Kondensatoren (14) wahlweise individuell oder in Gruppen mit Hilfe einer Auswahleinheit (15) aktivierbar sind.

18. Vorrichtung nach Anspruch 17, bei der die Auswahleinheit (15) anhand des Werts der Frequenz ($f_0$) des Stroms (I) gesteuert wird.

**Revendications**

1. Procédé destiné à la détection d'au moins une fréquence de vibration naturelle ($f_V$) d'une pale de turbine (2), comprenant les étapes qui consistent :

à alimenter un courant (I) d'une intensité constante et d'une fréquence ($f_0$) que l'on peut faire varier au choix à un électroaimant (4) placé à proximité de la pale (2) pour générer un champ magnétique adapté pour provoquer une vibration de la pale (2) ;
à détecter la vibration de la pale (2) ; et
à déterminer au moins une fréquence de vibration naturelle (fv) de la pale (2) sur la base de la vibration de la pale (2) ;

le procédé étant **caractérisé en ce qu'**il comprend les étapes qui consistent :

à détecter une distance (D) entre l'électroaimant (4) et la pale (2) de la turbine durant l'étape d'alimentation ;
à bloquer l'alimentation de l'électroaimant (4) si ladite distance (D) est inférieure à une valeur de sécurité donnée pour éviter un impact accidentel entre la pale (2) et l'électroaimant (4) ;
à mettre la pale (2) en rotation à une vitesse donnée avant l'alimentation de l'électroaimant (4).

2. Procédé selon la revendication 1, dans lequel l'étape qui consiste à bloquer l'alimentation de l'électroaimant (4) comprend l'étape qui consiste à annuler le courant (I) avant l'alimentation de l'électroaimant (4).

3. Procédé selon la revendication 1 ou 2, comprenant l'étape qui consiste à refroidir l'électroaimant (4).

**4.** Procédé selon l'une quelconque des revendications précédentes, comprenant l'étape qui consiste à éliminer le décalage de phase ($\varphi$) entre le courant (I) et la tension (V) à travers l'électroaimant (4).

**5.** Procédé selon la revendication 4, dans lequel l'étape qui consiste à éliminer le décalage de phase ($\varphi$) comprend l'étape qui consiste à placer le circuit comprenant l'électroaimant (4) en conditions de résonance au moyen d'un élément de rephasage (7) ayant une capacité ($C_0$) que l'on peut faire varier au choix.

**6.** Procédé selon la revendication 5, dans lequel l'étape qui consiste à placer le circuit en conditions de résonance comprend l'étape qui consiste à choisir une valeur de capacité ($C_0$) de l'élément de rephasage (7) sur la base de la valeur de fréquence ($f_0$) du courant (I).

**7.** Procédé selon l'une quelconque des revendications précédentes, dans lequel l'étape qui consiste à détecter la vibration de la pale (2) comprend l'étape qui consiste à détecter un signal corrélé à la vibration de la pale (2) et à juger que la fréquence ($f_0$) du courant (I) est une fréquence de vibration naturelle ($f_V$) de la pale (2) lorsque le signal corrélé à la vibration de la pale (2) a une valeur supérieure à un seuil donné.

**8.** Dispositif de détection d'au moins une fréquence de vibration naturelle ($f_V$) d'une pale de turbine (2) d'un étage entier de la turbine tournant à différentes vitesses de rotation, comprenant :

un électroaimant (4), adapté pour être placé à proximité de la pale (2) ;
un moyen (3) de génération de courant destiné à alimenter un courant (I) d'une intensité constante et d'une fréquence ($f_0$) que l'on peut faire varier au choix à l'électroaimant (4), afin de générer un champ magnétique adapté pour provoquer une vibration de la pale (2) ; et
un moyen de détection de fréquence, configuré pour déterminer au moins une fréquence de vibration naturelle ($f_V$) de la pale (2) sur la base de la vibration de la pale (2) ;

le dispositif étant **caractérisé en ce qu'**il comprend :

un moyen de détection de distance, destiné à détecter une distance (D) entre l'électroaimant (4) et la pale (2) de la turbine pendant l'alimentation du courant (I) à l'électroaimant (4) ;
une unité de commande (6) connectée au moyen de détection de distance pour bloquer l'alimentation de l'électroaimant (4) lorsque la distance (D) entre l'électroaimant (4) et la pale (2) est inférieure à une valeur de sécurité pour éviter un impact accidentel entre la pale (2) et l'électroaimant (4).

**9.** Dispositif selon la revendication 8, dans lequel le moyen de détection de distance comprend un capteur laser (20).

**10.** Dispositif selon la revendication 8 ou 9, dans lequel l'unité de commande (6) est configurée pour générer un signal de blocage ($S_B$), adapté pour annuler le courant (I) avant que celui-ci ne soit alimenté à l'électroaimant (4).

**11.** Dispositif selon l'une quelconque des revendications 8 à 10, dans lequel l'électroaimant (4) comprend un noyau (10) en forme de U et un bobinage (11), agencé essentiellement autour du noyau (10) et le long duquel circule le courant (I).

**12.** Dispositif selon l'une quelconque des revendications 8 à 11, comprenant un moyen de refroidissement (17, 18) pour refroidir l'électroaimant (4).

**13.** Dispositif selon la revendication 12, dans lequel le moyen de refroidissement (17, 18) comprend un échangeur de chaleur (17) et une bobine (18) réalisée en une tubulure non-magnétique, au sein duquel s'écoule un liquide de refroidissement ; la bobine (18) étant reliée à l'échangeur de chaleur (17) et mise essentiellement en contact avec le bobinage (11) de l'électroaimant (4).

**14.** Dispositif selon l'une quelconque des revendications 8 à 13, comprenant un élément de rephasage (7), configuré pour éliminer le décalage de phase ($\varphi$) entre le courant (I) et la tension (v) à travers l'électroaimant (4).

**15.** Dispositif selon la revendication 14, dans lequel l'élément de rephasage (7) est placé en série entre le moyen (3) de génération de courant et l'électroaimant (4).

**16.** Dispositif selon la revendication 14 ou 15, dans lequel l'élément de rephasage (7) a une capacité ($C_0$) que l'on peut faire varier au choix.

**17.** Dispositif selon la revendication 16, dans lequel l'élément de rephasage (7) comprend une batterie de condensateurs (14) placés en série et/ou en parallèle ; les condensateurs (14) pouvant être activés, au choix, individuellement ou en groupes au moyen d'un ensemble (15) de sélecteurs.

**18.** Dispositif selon la revendication 17, dans lequel l'ensemble (15) de sélecteurs est commandé sur la base de la valeur de fréquence ($f_0$) du courant (I) .

Fig.1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 762955 A
- EP 0042780 A